# EUROPEAN PATENT SPECIFICATION

(11) **EP 2 695 900 B1**
(45) Date of publication and mention of the grant of the patent: **20.03.2019**
(21) Application number: 12425135.6
(22) Date of filing: 06.08.2012
(51) Int. Cl.: C08G 18/42, C08G 18/75, C08G 18/76, C09J 175/04, C09J 175/06, C08G 18/40, B32B 7/12, B32B 27/32, B32B 27/34, C08G 18/32, C08G 18/10, C08G 18/12

(54) **PROCESS FOR PREPARING A TWO-COMPONENT POLYURETHANE ADHESIVE SYSTEM**
VERFAHREN ZUR HERSTELLUNG EINES ZWEIKOMPONENTEN-POLYURETHANKLEBSTOFFSYSTEMS
PROCÉDÉ DE PRODUCTION D'UN SYSTÈME D'ADHÉSIF DE POLYURÉTHANE À DEUX COMPOSANTS

(43) Date of publication of application: 12.02.2014
(73) Proprietor: Novachem Industriale S.r.l., 20025 Legnano (Milan) (IT)
(72) Inventor: Quetti Gianpiero, 20025 Legnano (MI) (IT)
(74) Representative: Biallo, Dario

(56) References cited:
- EP-A1- 1 234 842
- EP-A1- 1 772 506
- EP-A1- 1 964 868
- EP-A1- 2 154 221
- EP-A1- 2 172 500
- EP-A2- 1 369 443
- US-A- 5 143 995
- US-A- 5 227 451
- US-A- 5 502 149
- US-A- 5 998 538
- US-A1- 2003 083 451
- US-A1- 2009 191 145
- US-A1- 2010 330 238
- US-A1- 2011 003 898
- US-A1- 2011 123 479
- US-A1- 2012 021 227
- US-B1- 6 309 507

## Description

The present invention relates to the use of a two-component polyurethane adhesive system to reduce or prevent the formation of amines in a multilayer packaging subjected to a preservative thermal treatment.

The present invention is particularly useful in the production of flexible multilayer packages for the packaging of food or medical products.

Multilayer packages consisting of a plurality of superimposed layers of material held together by the interpositioning of layers of an adhesive material, are widely used in the state of the art for the packaging of food or medical products, whether they be in solid, liquid or paste form. The multilayer packaging is obtained by coupling the various layers of material with the help of a suitable adhesive system, by means of a lamination process.

The gluing material, or adhesive system, has the function of gluing together the various layers of material, generally consisting of plastic films, metallic films, plastic films metalized or lacquered with protective layers or with barrier layers, paper films or the like.

The most widely-used adhesive systems for the production of multilayer packaging are two-component polyurethane adhesive systems, of which one has isocyanic-terminated molecules (-NCO) and the other hydroxyl-terminated molecules (-OH).

These systems typically comprise a first main and also major weight component of the adhesive/binder system, consisting of a urethane polymer or urethane prepolymer, more rarely a polyol, and a second compound, also called chain-extender or cross-linker, but also erroneously called "catalyst", generally consisting of a polyol, more preferably a mixture of polyols, or a polyurethane, also in the form of an isocyanic adduct, respecting the scheme that one of the two components must have isocyanate chain-ends and the other hydroxyl chain-ends, so that after lamination, the adhesive can further react, increasing its molecular weight until the required performances are obtained.

For the purposes of the present invention, the term "urethane prepolymer" means the reaction product between at least one polyisocyanate, preferably a diisocyanate, and at least one polyol, generally diol, polymer or monomer, in a NCO:OH equivalent ratio equal to or higher than 2:1 for NCO-terminated prepolymers, and in a ratio equal to or lower than 1:2 for OH-terminated prepolymers, obtaining in both cases a urethane polymer with the lowest possible molecular weight (prepolymer).

The term "isocyanic adduct" refers to the product of the reaction between at least one poly-isocyanate and at least one polyol monomer, or polyfunctional hydroxyl monomer, in a NCO:OH equivalent ratio equal to or higher than 2:1 and consequently being isocyanic-terminated.

When the NCO:OH reaction ratio between poly-isocyanate and polyol ranges from 2:1 to 1:1, the product obtained is called NCO-terminated "urethane polymer", as within this range of values the polymer has free functionalities of the isocyanic type (-NCO).

When the NCO:OH ratio, on the other hand, ranges from 1:2 to 1:1, the component is called OH-terminated "urethane polymer", as within this range of values the polymer has free functionalities of the hydroxyl type (-OH).

In both cases, the closer the ratio to 1:1, the higher the molecular weight, expressed in Dalton (Da) or grams per mole (g/mole), of the urethane polymer thus obtained, will be. In the present description hereunder, the prepolymers or urethane polymers are also indicated on the whole with the term "urethane (pre)polymers".

The term "polyol" refers to a chemical compound, polymer or monomer, containing various hydroxyl functional groups (-OH).

The term "diol" (also industrially known as glycol) refers to a polyol, polymer or monomer, containing two hydroxyl functional groups.

The two-component polyurethane adhesive systems can be formulated as solutions in organic solvents (solvent-based systems) or without the presence of solvents (solvent-free systems).

In solvent-based systems, one or both of the components are dissolved in an organic solvent or mixture of organic solvents, in order to obtain a final adhesive system with at least one component having a relatively high molecular weight but with a viscosity, after dilution with the solvent of the adhesive system, which is adequate for easy application on the surfaces to be glued; in solvent-free systems, on the other hand, the components must be heated until an adequate viscosity is obtained for application on the surfaces to be glued.

In both cases, the two components are mixed with each other shortly before application to form the final adhesive system.

The manufacturing process of multilayer packagings generally provides: the distribution of the adhesive system over the surface of a first layer of material (film), evaporation of the solvent possibly present, lamination of a second film on the surface of the first film, coated with the adhesive system. The lamination is generally effected under heating, applying a moderate pressure on the layers to be coupled. The above operations are repeated for each of the possible further layers of material forming the multilayer packaging.

Multilayer packagings must guarantee high protection standards of the products from external contamination. A fundamental requisite of these packagings is to transfer the least possible quantity of substances to the products contained in their interior. The migration of chemical substances deriving from materials which form the packaging can in fact cause an alteration in the quality of the packaged product, to the extent, in the worst of cases, of creating harmful effects on the health of the end-user of the product. The release of substances forming the multilayer materials is governed by severe national and international regulations.

One of the main problems relating to multilayer packagings produced with polyurethane adhesive systems of the state of the art is the possible presence of primary amine compounds in food or pharmaceutical products contained in their interior.

The current problem of the formation of primary aromatic amines is particularly important. These substances, in fact, unlike primary aliphatic amines, are considered as being particularly dangerous for the health.

The European regulation in this respect (REGULATION (UE) nr. 10/2011 of the Committee of January 14, 2011, which revoked and substituted the Directive 2002/72/CE of the Committee, of August 6, 2002 and subsequent modifications) establishes under item 2 of Annex II that materials and objects made of plastic material must not "release" primary aromatic amines in food products or simulants in a quantity higher than 10 ppb (0.01 mg/kg), with the exception of the primary aromatic amines indicated in Table 1 of Annex 1. This limit is calculated as a ratio between the overall quantity of aromatic amines (expressed as aniline) and the quantity of product (or food simulant) contained in the packaging.

The maximum quantity of primary aliphatic amines that can be transferred to products by the multilayer packagings, on the other hand, is currently not bound to respect specific limit values. As the overall maximum quantity of substances that can be released from a packaging to the product contained therein (overall release limit) is regulated, however, it is desirable that the concentration of these substances also be maintained as low as possible.

Two-component polyurethane adhesive systems with a reduced release of primary amines, in particular, aromatic amines, are described in US 2010/0010156 A1. The adhesive systems described in this patent application are characterized in that they comprise, in addition to the two base components (which can be prepared starting from aliphatic or aromatic polyisocyanates), low-molecular weight compounds capable of reacting with the primary amines, said compounds containing one or more functional groups selected from epoxy groups, (meth)acrylic groups and anhydride groups of the carboxylic type.

The above low-molecular weight compounds have the function of neutralizing the primary amines which, as asserted by this patent application, are formed in the adhesive layer during and after the manufacturing process of the packaging due to the presence of water molecules, assuming that they can contribute, as can be deduced from the examples of US 2010/0010156 A1, to reducing, even if only partially, the risk of the release of primary aromatic amines to the products contained in the packaging. In our opinion, specifically due to their low molecular weight, the possibility that these products can migrate through the welding film (i.e. the film of the multilayer packaging which forms the innermost layer of the packaging and is in contact with the packaged product), should also be taken into account.

Unlike what is asserted in the above-mentioned patent application, the Applicant has found in the migration, through the welding film of the multilayer flexible packaging of low-molecular-weight polyisocyanate compounds such as "isocyanic monomers" coming from the layers of the polyurethane adhesive system, the origin of the formation of primary amines (aliphatic or aromatic). The formation of primary amines takes place after the migration of these isocyanic monomers and following their contact with the products contained in the packaging, according to the reaction mechanisms described further on.

For a better understanding of the studies effected and conclusions reached by the Applicant, we believe it would be useful to cite a few well-known chemical reactions of polyisocyanic compounds. The isocyanic groups (-NCO) can react with compounds containing two or more free functional groups with mobile hydrogen atoms, generally hydroxyl groups, (-OH), namely the most important groups among those capable of reacting with isocyanates. These compounds with mobile hydrogen atoms, and therefore reactive, are also indicated hereafter as "poly-H-acid" compounds. Examples of functional groups having one or more reactive hydrogen atoms with respect to isocyanic groups are hydroxyl groups (-OH), carboxylic groups (-COOH) and primary amine groups (-NH₂) or secondary amine groups (>NH).

It is also known that the reaction of an isocyanic group with a hydroxyl group leads to the formation of a urethane group, whereas that with an amine group leads to the formation of a ureic group. In addition to these two basic addition reactions, of particular importance for the purposes of the present invention is also the reaction between an isocyanate and water, wherein a first addition reaction produces carbamic acid which, due to its instability, immediately breaks down into carbon dioxide (CO₂) and into the corresponding amine (-NH₂) according to the reaction of scheme 1:

R-NCO + H₂O → R-NHCOOH → R-NH₂ + CO₂ (scheme 1)

wherein R represents an aliphatic or aromatic radical.

In order to avoid the formation of aromatic amines, it is currently of common use among producers of laminates (so-called *converters*) that the same laminates be withheld by the converter (and consequently not used for the preparation of packagings) for the time necessary for allowing all the free isocyanic monomer (non-reacted) - always present due to the excess of polyisocyanate used in the reaction mixture, in the isocyanic-terminated component of the adhesive system in variable quantities in relation to the specific composition of the adhesive and relative polymerization process - to have completed: (i) its own reaction, binding itself to the chain of the adhesive polymer; (ii) migration through the welding film as far as the surface of the laminate still wound onto the bobbin where, by reacting with the environmental humidity of the air always present in traces between the coils of the laminate, initially forms primary amines with the reaction mechanism of scheme 1. The amines, remaining on the surface of the laminate, immediately react with the subsequent migrated molecules of isocyanic monomer, with the formation of (poly)urea - classified by the European regulations in force, as a reaction product not intentionally present (NIAS) - according to the reaction of scheme 2:

R-NCO + H₂N-R' → R-NHCONH-R' (scheme 2)

wherein R and R' represent aliphatic or aromatic radicals. Poly-urea is a whitish solid, non-toxic, with a high melting point which can make the closing of packagings through welding more difficult, if it is present on the surface of the welding film in high quantities, as can occur when adhesive systems with a high content of free isocyanic monomer are used.

Consequently, in the case of a multilayer film wound onto a bobbin, there is never the formation of amine but only (poly)urea.

If, on the contrary, the multilayer film is used for the packaging of a wet product before the migration of the free isocyanic monomer onto the surface of the welding film, the corresponding primary amines, which are formed by reaction with water, as in the case described above of a multilayer film wound onto a bobbin, are in the presence of high quantities of water molecules. This favours the solubilization of the amine, generally a di-amine, in the water medium as soon as it is formed, with consequent diffusion from the point in which it was formed, i.e. the surface of the laminate, towards the interior of the packaging. The migrated amines cannot therefore react with the additional molecules of isocyanic monomer which continue to migrate onto the surface of the film facing the interior of the packaging; these monomers therefore almost exclusively encounter water molecules continuing to be transformed into amines, which in turn continue to be diffused in the water medium and consequently in the packaged product.

This mechanism explains the presence of amines inside the packaging, which would otherwise not exist if, as in the case of the multilayer film wound onto a bobbin, these primary amines, once formed, were to come into contact with a free isocyanic group with which to react. Primary amine groups (-NH2) are, in fact, the most reactive amongst those which react with isocyanic groups (-NCO).

Consequently, in the case of a packaging containing a wet product, the isocyanic monomer which migrates inside the packaging, is transformed into the corresponding primary amine and the formation degree of these amines exclusively depends on the quantity of isocyanic monomer which migrates onto the surface of the film facing the interior of the packaging, coming into contact with water.

Laminate producers normally experimentally determine, for each type of multilayer packaging and therefore adhesive system, the moment in which the formation of primary aromatic amines is terminated, by repeating specific analytical tests carried out with a type B simulant by means of the method L00.00-6 (06.11.82) BGA, for example. The time that has passed between the lamination and moment in which the presence of primary aromatic amines is no longer revealed in the food simulant, is assumed by the converter as the minimum time period that must pass before being able to use the laminate for the packaging of wet products to avoid the presence of primary amines in the packaged product, generally aromatic due to the wide use of polyurethane adhesive systems produced by aromatic isocyanic monomers.

In spite of this, if, once the minimum time has passed since the lamination, the analysis for determining the presence of these amines is repeated, after subjecting the packaging to the test conditions of preservative thermal cycles, said analysis will once again reveal the presence of these amines in a quantity generally well over the limits allowed.

One of the objectives of the present invention is to ensure that the law regulations relating to the formation limits of aromatic amines in contact with the product contained in the packaging, even when the same has been subjected to preservative thermal cycles, are respected.

The preservative thermal treatments (or cycles) are effected in order to give the products (food, cosmetics, hygiene or medicinal) contained in the packaging adequate preservability, stability and safety characteristics from a microbiological point of view. Examples of this treatment are pasteurization and sterilization treatment.

Preservative thermal treatment generally comprises heating the product together with its packaging. The heating is typically effected at a temperature within the range of 70-135°C, for a time generally varying from a few minutes to several hours. In some cases, the product is subjected to heating separately and then introduced into the packaging still hot.

At present, the only way for producing laminates for packagings which guarantee absence of the formation of aromatic amines following thermal preservation treatments is based on the use of polyurethane adhesive systems produced exclusively from polyisocyanic components of the aliphatic type, as established by the American Food and Drug Administration (F.D.A.) regulations.

The use of aliphatic adhesive systems, however, has various disadvantages. First of all, aliphatic adhesive systems are much more costly than polyurethane adhesive systems exclusively based on aromatic polyisocyanates (aromatic adhesive systems). Secondly, aliphatic adhesive systems have a much lower reactivity with respect to aromatic adhesive systems. The low reactivity of aliphatic adhesive systems compels multilayer packaging producers who use these adhesive systems to keep the packaging bobbins, at the end of the manufacturing process (converting), in a heated and thermostat-regulated environment for long periods of time, in order to accelerate the completion of the slow formation reaction of the urethane polymer with a higher molecular weight thus obtaining the hold and thermal performances of the adhesive.

The use of aliphatic adhesive systems therefore causes evident logistic problems in the management of the production process of multilayer packagings.

In the case of aromatic adhesive systems, on the other hand, there is the problem that the quantity of aromatic amines that can be formed vary considerably, depending on the type of aromatic adhesive system used and also from one production lot of the adhesive system to another. The formation degree of aromatic amines, moreover, also depends on the structure of the welding film of the multilayer packaging and specific conditions adopted in the preservative thermal cycles. The combination of all these variables therefore compels flexible packaging producers to analyze each production lot in order to verify the effective capacity of the packaging produced of respecting the limits imposed, thus allowing non-conformant lots to be possibly discarded. This naturally increases production costs in addition to making the whole packaging production process less efficient.

With respect to possible amine formation mechanisms, in the studies effectuated, the Applicant has observed that:
1) the binding energy of the urethane bond which is formed by reaction between a hydroxyl group and an isocyanic group is so high that said bond should be considered as being stable under the conditions adopted in the preservative thermal treatment to which the laminates are subjected; the temperature and duration of this treatment is consequently not sufficient for causing a breakage of the urethane bonds to such an extent as to cause contamination by amines;
2) even if there were to be a scission of the urethane polymer molecule due to the preservative thermal treatment or hydrolysis due to the presence of traces of water in contact with the adhesive layer, it is highly improbable that this would only cause the selective detachment of single isocyanic monomers capable of migrating through the layers of laminate (there is no experimental evidence of this phenomenon); it is likely, on the other hand, that there may be some breakage of the main polymeric chain (depolymerization), with the consequent formation of chains, yes, with a lower molecular weight, but in any case not low enough to allow their migration. In practice, the only effect that would be obtained from said breakage of the polymeric chain would be a reduction in the adhesion force between the films forming the layers of the laminate.
3) even if the water present in the layer of adhesive were to produce primary amines by reaction with a free isocyanic group, due to the extremely high reactivity of the primary amine groups with free isocyanic groups, said amine groups, once formed, would immediately react with the excess of isocyanic groups present in the system, excluding any possibility of migration of said amines.

On the basis of its research results, the Applicant believes that the formation of isocyanic monomers, in particular aromatic, for the implications of interest herein, which takes place after the packaging has been subjected to a preservative thermal cycle, can originate from the destruction of other bonds, present in the components of the adhesive for lamination, which are weaker than urethane bonds.

In particular, these bonds can be mainly bonds of the allophanate type but also of the biuret type, that the urethane and ureic groups respectively form by addition reaction with (poly)isocyanic monomers according to scheme 3 (allophanate bonds) and scheme 4 (biuret bonds), as the free isocyanic group (-NCO) of the monomer has the possibility of reacting with the secondary amine group >NH (therefore still containing a mobile hydrogen, even though with a reduced mobility with respect to that of a primary amine group) present in each urethane or ureic group:

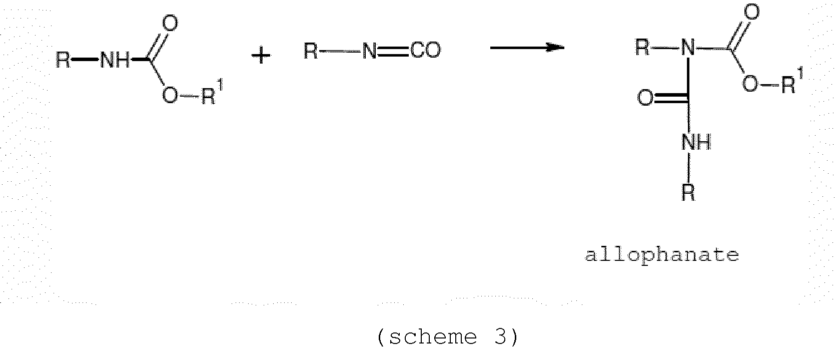

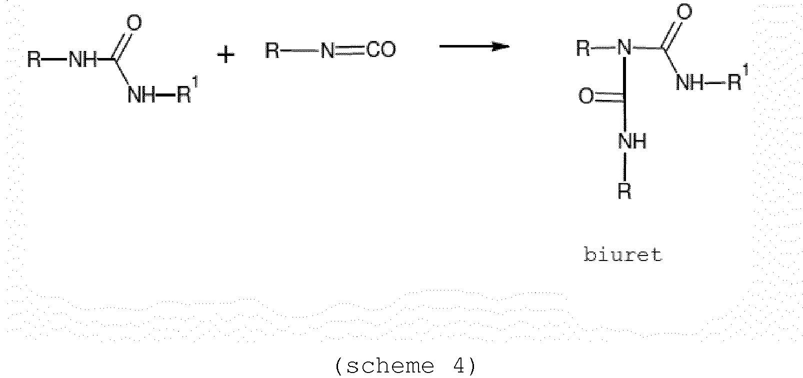

It should also be observed that in the urethane polymer chain obtained from the poly-addition process, the urethane groups are generally present in a much greater quantity with respect to the ureic groups deriving from the reaction of the isocyanic group with the water present as impurity in the polyol, used for the production of the adhesive.

The quantity of allophanate and biuret bonds present in the urethane components of an adhesive system depend, among other things, on the following factors:
a) reaction molar ratio between the poly-isocyanic component (polyfunctional isocyanic monomer) and the component(s) containing functional groups with active hydrogen atoms (poly-H-acid): the higher this ratio, i.e. the higher the quantity in moles of poly-isocyanate, the higher will be the quantity of the above bonds that are formed;
b) polymerization temperature and presence of reaction catalysts: the higher the temperature at which the polymerization reaction takes place, the greater the formation of allophanate and/or biuret bonds will be; the higher the concentration of catalysts, on the other hand, the lower the temperature will be at which these bonds can form. The catalysts can be present either because they have been specifically added to facilitate the polymerization reaction, or as impurities present in the raw materials used for the synthesis;
c) the quantity of hydrogen ions (H⁺) present in the reaction mixture for the preparation of the component of the polyurethane adhesive system (apparent pH): the smaller the quantity of these ions, the greater the formation will be of allophanate and biuret bonds.

Allophanate and biuret bonds are inevitably present in the polymeric chains of polyurethane adhesives in the state of the art, even if in a variable quantity in relation to the factors indicated above which influence the polymerization reaction. It is evident, however, that, due to the strict limits imposed by regulations in the field, even a reduced number of allophanate and biuret bonds could easily lead to exceed the maximum concentration allowed for aromatic amines in packagings produced from multilayer flexible film.

Further characteristics of allophanate and biuret bonds to be taken into consideration are the following: (i) the formation equilibria of allophanate and biuret bonds are easily reversible in particular conditions of use of polyurethane adhesives present in multilayer films; (ii) these bonds have a much lower thermal stability with respect to urethane bonds. The stability of allophanate bonds is also lower with respect to biuret bonds; (iii) allophanate bonds are generally present in polyurethane chains in much higher quantities with respect to those of biuret bonds. It should also be considered that among allophanate bonds, those obtained starting from aromatic isocyanic monomers are thermally less stable than those obtained from aliphatic isocyanic monomers.

In view of the above considerations, the low thermal stability of bonds deriving from these secondary reactions and present in polymeric chains deriving from aromatic polyisocyanates, in particular that of allophanate bonds, is held by the Applicant as being the main cause of the "re-formation" of the free isocyanic monomer, with a consequent migration and formation of amines which is observed following thermal treatment of the packagings produced using laminates obtained with aromatic polyurethane adhesive systems in the state of the art.

As is known, the breakdown reaction of the bonds begins to become evident at about 70°C and the rate of this re-formation reaction of the monomer increases with an increase in temperature, until it is practically complete at temperatures higher than 105°C. Consequently, when a packaging obtained from a multilayer laminate coupled with a polyurethane adhesive is subjected to a preservative thermal cycle, there will be the re-formation of isocyanic monomers in a percentage degree which increases as the thermal energy supplied by the heating increases, and the longer the duration of the heating at a certain temperature is.

As the formation of allophanate and biuret bonds cannot be avoided during the synthesis of the single components of polyurethane adhesives, and as their synthesis cannot be carried out so as to have a reduced quantity of these bonds to such an extent as to subsequently avoid causing a significant and variable formation of primary amines, the present invention aims to the use of polyurethane adhesive systems comprising urethane components which have been substantially deprived of these thermolabile bonds.

The allophanate and biuret bonds of a urethane component can be eliminated by subjecting the component, at the end of the synthesis, to a thermal treatment with the contemporaneous removal of the monomeric isocyanic compounds formed during the same treatment.

In order to reduce the possibility of the formation of amines (aliphatic or aromatic), the above thermal treatment and relative removal of the decomposition products is generally effected on all the components (aliphatic or aromatic) of the adhesive system which contain urethane bonds - (pre)polymers or isocyanic adducts -, as these components can contain allophanate or biuret groups.

In order to at least partially reduce the risk of the formation of primary amines in the adhesive system, however, the process of the present invention can only be applied to one or some of the components of the adhesive containing urethane bonds.

The maximum temperature at which the thermal treatment can be effected, varies in relation to the thermal stability of the component to be treated and is selected in relation to the physico-chemical characteristics of the component (molecular weight, rheological characteristics, etc.). The thermal treatment is generally carried out at a temperature varying within the range of 70°C - 225°C, preferably within the range of 140°C - 200°C.

The thermal treatment of the urethane component must be prolonged for a time sufficient for substantially removing all of the allophanate and biuret bonds. The duration of the treatment therefore strictly depends on the temperature: the higher the temperature, the shorter the duration of the treatment will be. The temperature and duration of the treatment are parameters established also in relation to the type and size of the industrial plant used for the treatment. The duration of the thermal treatment typically ranges from 0.2 to 15 minutes, preferably from 0.5 to 10 minutes.

In order to effect the thermal treatment and removal of the monomers in accordance with the present invention, conventional equipment can be used, such as a thin-layer evaporator or an extruder. The removal of the volatile compounds can be effected by the application of a vacuum by suction of the vapours developed during the thermal treatment, or by means of a gaseous stream (entrainment stream) capable of driving the above vapours and removing them from the treated product. The treatment can also be effected inside the reactor in which the synthesis of the urethane component is effected.

Urethane (pre)polymers having a molecular weight within the range of 500-5000 g/mole, for example, can be effectively treated at a temperature ranging from 150 to 200°C, for a duration of 1-5 minutes.

In particular, an objective of the present invention is to provide a two-component polyurethane adhesive system which can be used with a reduced formation of amines, in particular primary aromatic amines.

A further objective of the present invention is to provide a two-component polyurethane adhesive system which, when used for the manufacturing of multilayer packagings, also allows the strictest regulatory release limits of primary amines, especially primary aromatic amines, to the products contained in the packagings, to be respected, in particular when subjected to preservative thermal treatment.

An object of the present invention therefore relates to the use of a two-component polyurethane adhesive system according to claim 1.

According to the present invention, the adhesive systems comprising thermally treated polyurethane components, once applied in the preparation of multilayer packagings, do not cause the formation of primary amines (or only to a marginal extent), even when the packagings are subjected to thermal treatment, as demonstrated by the tests carried out by the Applicant.

In a preferred embodiment of the present invention, the thermal treatment with the removal of decomposition products is applied at least to the components of the adhesive system composed of polyurethane compounds based on aromatic polyisocyanates, i.e. isocyanic (pre)polymers or adducts prepared using aromatic polyisocyanates, whether they be used as binders and/or as chain-extenders. In this way, the risk of the formation of primary amines of the aromatic type is specifically reduced.

In a further preferred embodiment of the present invention, the two-component adhesive system is of the mixed type, i.e. it comprises a first component of the aliphatic type and a second component of the aromatic type, the aliphatic or aromatic component being indifferently the binder or chain-extender.

For the purposes of the present invention, aliphatic component refers to a urethane (pre)polymer or isocyanic adduct prepared starting from at least one aliphatic (or cycloaliphatic) polyisocyanate, regardless of the aliphatic or aromatic nature of the second or further reagent (polyol) with which said (pre)polymer or isocyanic adduct is synthesized.

Aromatic component refers to a urethane (pre)polymer or isocyanic adduct prepared starting from at least one aromatic polyisocyanate, regardless of the aliphatic or aromatic nature of the second or further reagent (polyol) with which said (pre)polymer or isocyanic adduct is synthesized.

In mixed adhesive systems, although both components can be subjected to thermal treatment, it is preferable, however, to treat only the component containing aromatic urethane bonds (for example, when only the formation of aromatic amines is to be avoided). If the aliphatic components are not treated, in fact, the overall energy consumptions for the production of the adhesive system, are reduced.

Among mixed solvent-based adhesive systems, moreover, systems in which the hydroxyl-terminated aliphatic polyurethane component is the binder, and the isocyanic-terminated aromatic polyurethane component is the chain-extender, are particularly preferred.

As the polymer used as binder in solvent-based adhesive systems, in fact, has a much higher molecular weight than the chain-extender, it also has a higher viscosity with respect to the latter. The high viscosity makes it more difficult to effectively carry out the thermal treatment according to the present invention.

Mixed systems therefore represent an excellent compromise between the practicality of embodying the present invention and the production costs of the adhesive system. The overall quantity of costly aliphatic polyisocyanate used in a mixed system in which the hydroxyl-terminated aliphatic isocyanic component is the binder, is in fact much lower than that of a homogeneous two-component adhesive system, i.e. an adhesive system in which both components are aliphatic.

OH-terminated polymers are in fact obtained by reacting at least one polyisocyanate and at least one polymer polyol in a NCO:OH equivalent ratio varying from 1:1.10 to 1:1.85, preferably from 1:1.25 to 1:1.73.

Furthermore, the above adhesive system comprising an NCO-terminated aromatic chain-extender offers the further advantage of being more reactive than a corresponding adhesive system with a chain-extender having free aliphatic isocyanic groups; this leads to a significant reduction in the duration of the storage of the finished multilayer film, before being able to use it for packaging.

It is evident, however, that a mixed adhesive system in which the binder is an NCO-terminated aliphatic polymer and the chain-extender is an OH-terminated prepolymer from aromatic isocyanates treated as described herein, is in any case effective in preventing the formation of amines, in particular aromatic amines, in multilayer packagings subjected to preservative thermal treatment.

The urethane (pre)polymers or isocyanic adducts which can be used for the production of the adhesive systems can be prepared starting from the aromatic, aliphatic or cycloaliphatic polyisocyanates available on the market.

The polymer polyols are preferably polyether polyols or polyester polyols or mixtures thereof.

The polyether polyols are generally polypropylene glycol, in the various molecular weights available and selected in relation to the characteristics to be conferred to the adhesive.

The polyester polyols are prepared by polycondensation of polyfunctional alcohols (for example, monoethylene glycol, diethylene glycol, neopentyl glycol, etc.) with polyfunctional carboxylic acids (for example, adipic acid, isophthalic acid, etc.) or polycarboxylic anhydrides (phthalic anhydride, etc.).

The polyols used typically have a molecular weight ranging from 400 to 3,000 Da.

The urethane (pre)polymers can be synthesized starting from polyisocyanates and polyols, generally diols, using the techniques and equipment known in the art.

The two-component polyurethane adhesive system with a reduced release of primary amines is prepared by mixing the binder and chain-extender shortly before use.

In the adhesive systems used for the manufacturing of multilayer packagings, the chain-extender with respect to the weight of the binder is typically used in solvent-based systems in a quantity varying within the range of 1%-50% by weight, whereas in solvent-free systems in a quantity varying within the range of 30%-100%.

The adhesive systems can also contain additives, such as tackifying resins, adhesion promoters, catalysts, stabilizers, viscosity-regulators, fillers, pigments, elasticizers, antioxidants, etc..

The two-component polyurethane adhesive systems can be formulated with solvents (solvent-based systems) or without solvents (solvent-free). In the case of solvent-free systems, both the binder and chain-extender are in liquid state at room temperature.

When formulated in the form of solvent-based adhesive systems, the (pre)polymers or isocyanic adducts of the adhesive system are dissolved in suitable organic solvents, generally ethyl acetate, but also, more rarely, methylethylketone, methylisobutylketone, toluene or mixtures thereof.

When formulated as solvent-free adhesive systems, both components have a molecular weight that is sufficiently low as to be liquid at room temperature.

The adhesive systems prepared are liquid at room temperature or under application conditions. They can be applied on the surfaces to be glued, for example layers of material forming a multilayer packaging, using the techniques and equipment known in the art.

According to the present invention, the two-component polyurethane adhesive systems, once applied to the surfaces to be glued, do not release - except in negligible quantities - primary amine compounds, in particular primary aromatic amines.

This characteristic allows the above adhesive systems to be advantageously used for preparing multilayer packagings for packaging food or medicinal products, in solid, liquid or paste form, significantly reducing the risk of the release of contaminants to these products. In particular, the packagings produced with the adhesive systems prepared according to the present invention release extremely low quantities of primary amines even when subjected to preservative thermal treatment.

With the adhesive systems prepared according to the present invention, multilayer packagings characterized by a release level of aromatic amines (expressed as aniline) lower than 10 ppb (measured according to the method L.00.00-6 BGA, Amtliche Sammlung von Untersuchungsverfahren (ASU), § 35 LMBG), can be produced.

These performances can be obtained by combining various types of binders and chain-extenders. Adhesive systems can be formulated, having a good cost/performance ratio according to the specific requirements of multilayer packaging producers.

In particular, by using mixed adhesive systems (i.e. comprising both aromatic compounds and aliphatic compounds), suitably formulated for having a low content of the costly aliphatic isocyanic monomer, multilayer packagings can be produced, which respect the release limits of primary aromatic amines at costs only slightly higher than adhesive systems exclusively comprising aromatic components.

On the whole, the present invention also makes production processes of multilayer packagings more efficient as it avoids repeated and costly quality controls of the finished packagings, which, on the contrary, are currently indispensable for being able to establish when the packagings can be used for food or medical products.

The following embodiment examples are provided for purely illustrative purposes of the present invention and should not be considered as limiting the protection scope defined by the enclosed claims.

### EXAMPLE 1

In accordance with the present invention, a two-component polyurethane adhesive system was prepared comprising:
- a binder, OH-terminated polymer obtained by the reaction of a polyester polyol (diethylene glycol adipate) with aliphatic diisocyanate IPDI in a NCO:OH equivalent ratio equal to 1:1.25. The average molecular weight of the resulting polymer is 7,500 Da. The polymer is obtained in ethyl acetate (dry content of the polymer equal to 75% by weight with respect to the weight of the solution);
- a chain-extender, isocyanic adduct (NCO-terminated) obtained by the reaction of aromatic diisocyanate TDI with trimethylolpropane (TMP) in a NCO:OH equivalent ratio equal to 2.1:1. The average molecular weight of the resulting polymer is 650 Da. After the synthesis, the chain-extender was treated at 180°C, under vacuum suction, in a thin-layer evaporator, for 3 minutes. After cooling, the chain-extender was diluted with ethyl acetate to form a solution having a dry polymer content equal to 75% by weight with respect to the weight of the solution.

The final adhesive system was obtained by mixing the above chain-extender and binder in a weight ratio equal to 100:8.

### EXAMPLE 2

A second two-component polyurethane adhesive system was prepared in the form of a solvent-free adhesive system with the following two components:
- a binder, NCO-terminated polymer obtained by the reaction of a mixture of polypropylene glycol-polyol and polyester-polyol (both having a molecular weight of 1,000 Da, mixed in a 50:50 ratio) with aromatic diisocyanate TDI in a NCO:OH equivalent ratio equal to 2.16:1. The average molecular weight of the resulting polymer is 1235 Da. The polymer, in the liquid state, was not diluted in any solvent;
- a chain-extender, OH-terminated polymer obtained by the reaction of aromatic diisocyanate TDI with a mixture of linear polyester-polyol having a molecular weight of 1,000 Da and trifunctional polypropylene glycol having a molecular weight of 450 Da (in a weight ratio with each other equal to 70:30) in a NCO:OH equivalent ratio equal to 1:2.8. The average molecular weight of the resulting polymer is 1320. The polymer, in the liquid state, was not diluted in any solvent.

The binder and chain-extender were treated at 200°C, under vacuum suction, for 2 minutes in a thin-layer evaporator.

The final adhesive system was obtained by mixing the above chain-extender and binder in a weight ratio equal to 100:55.

### EXAMPLE 3

The adhesive systems of Examples 1 and 2 were used for gluing a flexible bioriented polyamide film (thickness 50 microns) to a cast polypropylene film (thickness 70 microns) by means of hot lamination. The laminates obtained with the two adhesive systems were left under thermostat-regulated conditions (32°C) for 4 days to allow the completion of the polymerization reaction.

The laminates were then subjected to the migration test of aromatic amines according to the method L.00.00-6 BGA, Amtliche Sammlung von Untersuchungsverfahren (ASU), § 35 LMBG.

The specific conditions adopted in the test were the following:
- solvent (food simulant B) : acetic acid at 3% by weight in distilled water;
- duration and temperature: for the laminate of Example 1 a test at 70°C for 2 hours; a test at 121°C for 30 minutes; a test at 133°C for 30 minutes; for the laminate of Example 2, a test at 70°C for 2 hours.

Under the above conditions, the tests revealed for both adhesive compositions, the release of primary aromatic amines (expressed as aniline) in a quantity:
- lower than 0.001 mg per kg of food simulant;
- lower than 0.0002 mg per dm² of film surface;
i.e. lower than the sensitivity of the analytical test and such as to consider the aromatic amines as absent.

## Claims

1. Use of a two-component polyurethane adhesive system which comprises:
- at least one binder comprising at least one urethane prepolymer or urethane polymer, either isocyanic-terminated or hydroxyl-terminated,
- at least one chain-extender selected from a polyol, a urethane prepolymer or polymer, and mixtures thereof, all hydroxyl-terminated when the binder of the adhesive system is isocyanic-terminated,
- at least one chain-extender selected from urethane prepolymer, urethane polymer or isocyanic adduct, and mixtures thereof, all isocyanic-terminated when the binder of the adhesive system is hydroxyl-terminated,
wherein said adhesive system is prepared through a process comprising:
(a) thermally treating said binder and/or said chain-extender, when different from a polyol, at a temperature within the range of 70-225°C;
(b) removing the isocyanic monomers formed during said thermal treatment,
to reduce or prevent the formation of amines in a multilayer packaging subjected to a preservative thermal treatment, said amines being originated from the destruction of allophanate bonds or biuret bonds present in said binder and/or said chain-extender.

2. Use of a two-component polyurethane adhesive system according to claim 1, wherein said temperature is within the range of 140-200°C.

3. Use of a two-component polyurethane adhesive system according to one or more of the previous claims, wherein said thermal treatment is prolonged for a time ranging from 0.2 minutes to 15 minutes, preferably from 0.5 minutes to 10 minutes.

4. Use of a two-component polyurethane adhesive system according to one or more of the previous claims, wherein said binder and/or said chain-extender are thermally treated in a thin-layer evaporator or an extruder or in mass in a process reactor.

5. Use of a two-component polyurethane adhesive system according to one or more of the previous claims, wherein the compounds deriving from said thermal treatment are removed by means of suction or by means of a gaseous entrainment stream.

6. Use of a two-component polyurethane adhesive system according to one or more of the previous claims, wherein said at least one binder is obtained from one or more aliphatic polyisocyanates and said at least one chain-extender is obtained starting from one or more aromatic polyisocyanates, said aromatic chain-extender being subjected to said thermal treatment.

7. Use of a two-component polyurethane adhesive system according to one or more of the claims from 1 to 5, wherein said at least one binder is obtained from one or more aromatic polyisocyanates and said at least one chain-extender is obtained starting from one or more aliphatic polyisocyanates, said aromatic binder being subjected to said thermal treatment.

8. Use of a two-component polyurethane adhesive system according to one or more of the previous claims, wherein said binder is -OH terminated and said chain-extender is -NCO terminated.

9. Use of a two-component polyurethane adhesive system according to one or more of the previous claims, wherein said binder is -NCO terminated and said chain-extender is -OH terminated.

10. Use of a two-component polyurethane adhesive system according to claim 6, wherein said binder is -OH terminated and said chain-extender is -NCO terminated, said binder being obtained by the reaction of at least one aliphatic polyisocyanate with at least one polyol in a NCO:OH equivalent ratio ranging from 1:1.10 to 1:1.85, preferably ranging from 1:1.25 to 1:1.73.

## Patentansprüche

1. Verwendung eines Zweikomponenten-Polyurethan-Klebstoffsystems, das Folgendes umfasst:
- mindestens ein Bindemittel, das mindestens ein Urethanpräpolymer oder Urethanpolymer umfasst, entweder isocyanterminiert oder hydroxylterminiert,
- mindestens einen Kettenverlängerer, ausgewählt aus einem Polyol, einem Urethanpräpolymer oder -polymer und Gemischen davon, alle hydroxylterminiert, wenn das Bindemittel des Klebesystems isocyanterminiert ist,
- mindestens einen Kettenverlängerer, ausgewählt aus Urethanpräpolymer, Urethanpolymer oder Isocyanaddukt und Gemischen davon, alle isocyanterminiert, wenn das Bindemittel des Klebesystems hydroxylterminiert ist,
wobei das Klebesystem durch ein Verfahren hergestellt wird, das Folgendes umfasst:
(a) Wärmebehandeln des Bindemittels und/oder des Kettenverlängerers, wenn er sich von einem Polyol unterscheidet, bei einer Temperatur im Bereich von 70 bis 225 °C,
(b) Entfernen der während der Wärmebehandlung gebildeten Isocyanatmonomere,
um die Bildung von Aminen in einer mehrschichtigen Verpackung zu reduzieren oder zu verhindern, die einer konservierenden Wärmebehandlung unterzogen wird, wobei die Amine aus der Zerstörung von Allophanatbindungen oder Biuretbindungen stammen, die in dem Bindemittel und/oder dem Kettenverlängerer vorhanden sind.

2. Verwendung eines Zweikomponenten-Polyurethan-Klebstoffsystems nach Anspruch 1, wobei die Temperatur im Bereich von 140 bis 200 °C liegt.

3. Verwendung eines Zweikomponenten-Polyurethan-Klebstoffsystems nach einem oder mehreren der vorhergehenden Ansprüche, wobei die Wärmebehandlung um eine Zeitspanne von 0,2 Minuten bis 15 Minuten, vorzugsweise von 0,5 Minuten bis 10 Minuten, verlängert wird.

4. Verwendung eines Zweikomponenten-Polyurethan-Klebstoffsystems nach einem oder mehreren der vorhergehenden Ansprüche, wobei das Bindemittel und/oder der Kettenverlängerer in einem Dünnschichtverdampfer oder einem Extruder oder in Masse in einem Prozessreaktor wärmebehandelt werden.

5. Verwendung eines Zweikomponenten-Polyurethan-Klebstoffsystems nach einem oder mehreren der vorhergehenden Ansprüche, wobei die aus der Wärmebehandlung stammenden Verbindungen durch Absaugen oder mittels eines gasförmigen Mitnahmestroms entfernt werden.

6. Verwendung eines Zweikomponenten-Polyurethan-Klebstoffsystems nach einem oder mehreren der vorhergehenden Ansprüche, wobei das mindestens eine Bindemittel aus einem oder mehreren aliphatischen Polyisocyanaten gewonnen wird und der mindestens eine Kettenverlängerer ausgehend von einem oder mehreren aromatischen Polyisocyanaten gewonnen wird, wobei der aromatische Kettenverlängerer der Wärmebehandlung unterzogen wird.

7. Verwendung eines Zweikomponenten-Polyurethan-Klebstoffsystems nach einem oder mehreren der Ansprüche von 1 bis 5, wobei das mindestens eine Bindemittel aus einem oder mehreren aromatischen Polyisocyanaten gewonnen wird und der mindestens eine Kettenverlängerer ausgehend von einem oder mehreren aliphatischen Polyisocyanaten gewonnen wird, wobei das aromatische Bindemittel der Wärmebehandlung unterzogen wird.

8. Verwendung eines Zweikomponenten-Polyurethan-Klebstoffsystems nach einem oder mehreren der vorhergehenden Ansprüche, wobei das Bindemittel -OH-terminiert ist und der Kettenverlängerer -NCO-terminiert ist.

9. Verwendung eines Zweikomponenten-Polyurethan-Klebstoffsystems nach einem oder mehreren der vorhergehenden Ansprüche, wobei das Bindemittel -NCO-terminiert ist und der Kettenverlängerer -OH-terminiert ist.

10. Verwendung eines Zweikomponenten-Polyurethan-Klebstoffsystems nach Anspruch 6, wobei das Bindemittel -OH-terminiert und der Kettenverlängerer -NCO-terminiert ist, wobei das Bindemittel durch die Reaktion von mindestens einem aliphatischen Polyisocyanat mit mindestens einem Polyol in einem NCO:OH-Äquivalenzverhältnis im Bereich von 1:1,10 bis 1:1,85, vorzugsweise im Bereich von 1:1,25 bis 1:1,73, gewonnen wird.

## Revendications

1. Utilisation d'un système d'adhésif de polyuréthane à deux composants qui comprend :
- au moins un liant comprenant au moins un prépolymère d'uréthane ou un polymère d'uréthane, soit à terminaison isocyanique soit à terminaison hydroxyle,
- au moins un allongeur de chaîne sélectionné parmi un polyol, un prépolymère ou un polymère d'uréthane, et les mélanges de ceux-ci, étant tous à terminaison hydroxyle lorsque le liant du système d'adhésif est à terminaison isocyanique,
- au moins un allongeur de chaîne sélectionné parmi un prépolymère d'uréthane, un polymère d'uréthane ou un adduit isocyanique, et les mélanges de ceux-ci, étant tous à terminaison isocyanique lorsque le liant du système d'adhésif est à terminaison hydroxyle,
dans laquelle ledit système d'adhésif est préparé par l'intermédiaire d'un procédé consistant à :
(a) traiter thermiquement ledit liant et/ou ledit allongeur de chaîne, lorsqu'ils diffèrent d'un polyol, à une température comprise entre 70 et 225°C ;
(b) retirer les monomères isocyaniques formés pendant ledit traitement thermique,
afin de réduire ou d'éviter la formation d'amines dans un emballage multicouche soumis à un traitement thermique de conservation, lesdites amines étant issues de la destruction de liaisons allophanate ou de liaisons biuret présentes dans ledit liant et/ou ledit allongeur de chaîne.

2. Utilisation d'un système d'adhésif de polyuréthane à deux composants selon la revendication 1, dans laquelle ladite température est comprise entre 140 et 200°C.

3. Utilisation d'un système d'adhésif de polyuréthane à deux composants selon l'une ou plusieurs des revendications précédentes, dans laquelle ledit traitement thermique est prolongé pendant une durée comprise entre 0,2 minute et 15 minutes, de préférence entre 0,5 minute et 10 minutes.

4. Utilisation d'un système d'adhésif de polyuréthane à deux composants selon l'une ou plusieurs des revendications précédentes, dans laquelle ledit liant et/ou ledit allongeur de chaîne sont traités thermiquement dans un évaporateur à couches minces ou dans une extrudeuse ou en masse dans un réacteur de traitement.

5. Utilisation d'un système d'adhésif de polyuréthane à deux composants selon l'une ou plusieurs des revendications précédentes, dans laquelle les composés issus dudit traitement thermique sont retirés par aspiration ou au moyen d'un flux d'entraînement gazeux.

6. Utilisation d'un système d'adhésif de polyuréthane à deux composants selon l'une ou plusieurs des revendications précédentes, dans laquelle ledit au moins un liant est obtenu à partir d'un ou plusieurs polyisocyanates aliphatiques et ledit au moins un allongeur de chaîne est obtenu à partir d'un ou plusieurs polyisocyanates aromatiques, ledit allongeur de chaîne aromatique étant soumis audit traitement thermique.

7. Utilisation d'un système d'adhésif de polyuréthane à deux composants selon l'une ou plusieurs des revendications 1 à 5, dans laquelle ledit au moins un liant est obtenu à partir d'un ou plusieurs polyisocyanates aromatiques et ledit au moins un allongeur de chaîne est obtenu à partir d'un ou plusieurs polyisocyanates aliphatiques, ledit liant aromatique étant soumis audit traitement thermique.

8. Utilisation d'un système d'adhésif de polyuréthane à deux composants selon l'une ou plusieurs des revendications précédentes, dans laquelle ledit liant est à terminaison OH et ledit allongeur de chaîne est à terminaison NCO.

9. Utilisation d'un système d'adhésif de polyuréthane à deux composants selon l'une ou plusieurs des revendications précédentes, dans laquelle ledit liant est à terminaison NCO et ledit allongeur de chaîne est à terminaison OH.

10. Utilisation d'un système d'adhésif de polyuréthane à deux composants selon la revendication 6, dans laquelle ledit liant est à terminaison OH et ledit allongeur de chaîne est à terminaison NCO, ledit liant étant obtenu par la réaction d'au moins un polyisocyanate aliphatique avec au moins un polyol selon un rapport d'équivalence NCO:OH compris entre 1:1,10 et 1:1,85, de préférence entre 1:1,25 et 1:1,73.
